# EUROPEAN PATENT SPECIFICATION

(11) **EP 1 600 018 B1**
(45) Date of publication and mention of the grant of the patent: **27.02.2008**
(21) Application number: 04700147.4
(22) Date of filing: 05.01.2004
(51) Int. Cl.: H04Q 7/22, G10L 15/26, H04M 1/725

(54) **MULTIMEDIA AND TEXT MESSAGING WITH SPEECH-TO-TEXT ASSISTANCE**
MULTIMEDIA- UND TEXTNACHRICHTEN MIT SPRACHE-ZU-TEXT-HILFE
MESSAGERIE MULTIMEDIA ET TEXTUELLE DOTEE D'UNE AIDE A LA CONVERSION VOIX-TEXTE

(30) Priority: 06.03.2003 US 248982
(43) Date of publication of application: 30.11.2005
(73) Proprietor: Sony Ericsson Mobile Communications AB, 221 88 Lund (SE)
(72) Inventor: NORTHCUTT, John, W., Chapel Hill, NC 27516 (US)
(74) Representative: Charles, Glyndwr
(86) International application number: PCT/IB2004/000041
(87) International publication number: WO 2004/080095

(56) References cited:
- WO-A-02/49319
- DE-A- 19 959 903
- US-A1- 2002 142 787

## Description

### Background Art

One of the most used features of mobile phones is messaging, either Short Messaging Service (SMS) text messaging or Multi-media Messaging Service (MMS) messaging. Subscribers often use these services in lieu of placing a call to another party. In addition, MMS provides the capability to include audible and visual attachments with a message.

Messaging is desirable because it does not interrupt the other party the way a phone call would. A receiving party can discreetly receive a message while in a meeting without causing a disturbance to others in the meeting.

The biggest drawback to using SMS or MMS messaging over a mobile phone is that inputting the message can be difficult due to the relatively small size of a mobile phone keypad. Moreover, a numeric keypad provides a clumsy means for inputting text. Keyboard accessories that facilitate text entry are available for mobile phones but they too are quite small and difficult to manage effectively.

What is needed is a system or method for simplifying creation and sending of SMS or MMS messages to another party.

### Disclosure of the Invention

Mobile phone manufactures often include "canned" messages in the phone's memory. These canned messages are ones that are repeated often. The user merely scrolls through a list of canned messages and selects one to send. The act of scrolling through and selecting a canned message is presumably less time consuming than editing the same message from scratch. Users can also append to the list of canned messages with their own creations.

A canned message works well at providing a starting point for a message but cannot always provide the specifics of a message. For instance, a canned message could be "Meet me __ at __", where the first blank could specify a time (e.g., today, tonight, tomorrow) while the second blank could specify a place (e.g., home, work, school). Obviously, a single canned message cannot cover all the permutations of a desired message. It is also impractical to create a canned message for each permutation. The most efficient solution is to use a generic canned message that can be edited to suit the user's instant needs.

Editing a canned message, however, presents the same mobile phone data entry issues as described earlier. One solution is to incorporate speech-to-text processing to assist in the editing of SMS and MMS messages.

US 2002/142787 discloses a method of inputting part of a message and selecting a predefined text pattern being the closest match of the input. Furthermore also text portions within a message (i.e. open fields) can be spoken in and selected with stored text parts.

One aspect of the present invention describes a system and method of creating a multi-media voice and text message on a mobile phone where the voice portion of the MMS message is a verbatim rendition of the text portion. The mobile phone includes a messaging function responsive to voice and text input. The message composer accesses the mobile phone's messaging function and speaks a message. The spoken message is recorded converted to a text message. Finally, the text portion and spoken portion are combined into an MMS message and sent to a recipient using the mobile phone's messaging functions.

Another aspect of the present invention describes a system and method of creating a multi-media voice and text message on a mobile phone where the voice portion and the text portion of the MMS message are different. This allows the message composer to personalize either the text portion or the voice portion. The message composer accesses the mobile phone's messaging function and speaks a message. The spoken message is recorded converted to a text message. At this point, the message composer records a second spoken message contextually related to the text message. Now, the text portion and the second spoken message are combined into an MMS message and sent to a recipient using the mobile phone's messaging functions.

Yet another aspect of the present invention describes a system and method of creating an MMS message on a mobile phone utilizing canned messages and speech-to-text assistance to edit the canned message. The message composer accesses the mobile phone's messaging function and inputs part of a message, either by voice or text. The mobile phone compares the input to a database and displays a list of text messages that closely match the input. The text messages contain at least one open field to be filled in with specific information to make the message complete. The message composer selects one of the displayed text messages. This message is then featured in a text editing function so that it may be completed.

Editing the selected text message is achieved with speech to text assistance. A voice input is received for the first/next open field in the selected text message. The voice input is converted to a text input. The text input is compared to a database to try to find a match.

If there is a match, then it is determined if the match corresponds to a word (phrase), an image, or both. If the match is a word (phrase), then the open field is filled with the word (phrase). If the match is an image, then the open field is filled with the image. If the match corresponds to both a word (phrase) or an image, then the message composer selects either the word (phrase) or the image and fills the open field with the selection. A check is made to see if there are more open fields in the canned message. If there are more open fields, then control is returned to the voice input step and the process is repeated. Otherwise, the editing process is terminated.

If there is not match, then the mobile phone displays the closest match in the database and asks the message composer whether to use the closest match.

If the closest match is used, then the open field is filled with the closest match. A check is made to see if there are more open fields in the canned message. If there are more open fields, then control is returned to the voice input step and the process is repeated. Otherwise, the editing process is terminated.

If the closest match is not used, then the mobile phone prompts the message composer to add the current text input to the database. The current input is placed into the open field. A check is made to see if there are more open fields in the canned message. If there are more open fields, then control is returned to the voice input step and the process is repeated. Otherwise, the editing process is terminated.

### Brief Description Of The Drawings

**FIGURE 1** is a flowchart describing the creating and sending of SMS or MMS messages from canned messages.
**FIGURE 2** is a flowchart describing the process of editing a canned message using voice and/or predictive text input.
**FIGURE 3** is a flowchart describing the creating and sending of SMS or MMS messages with speech-to-text assistance.

### Best Mode for Carrying Out the Invention

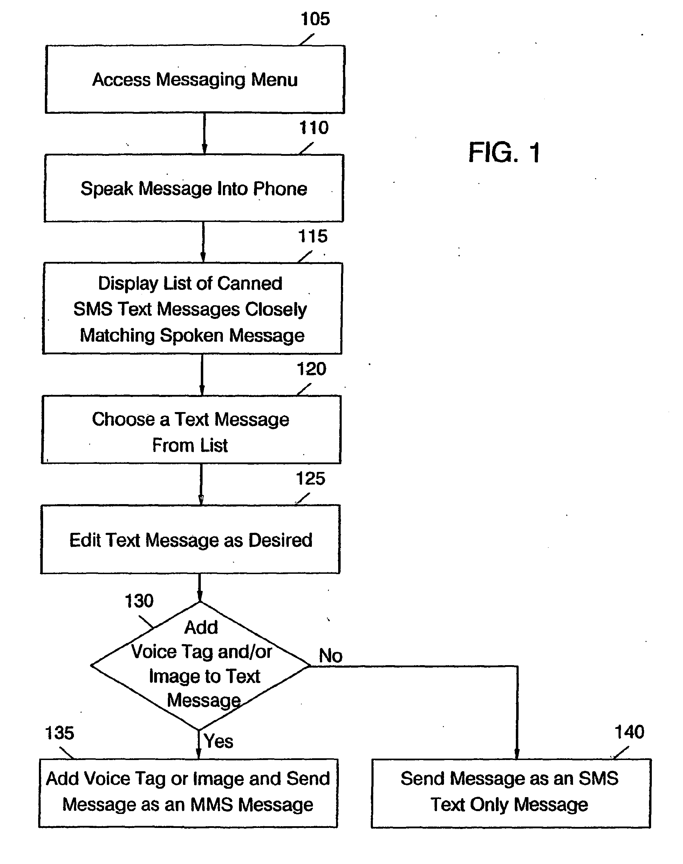

**FIGURE 1** is a flowchart describing the creating and sending of SMS or MMS messages from canned messages. A user (message composer) accesses the mobile phone's messaging function 105. This is typically done by navigating a graphical user interface (GUI) menu structure programmed into the mobile phone. Alternatively, the mobile phone can be programmed to respond to voice input to activate the messaging function. The message composer then speaks a message **110** into the mobile phone's microphone causing the mobile phone's screen to display a list **115** of canned messages that most closely match the spoken message.

This is achieved by first converting the spoken message to text and comparing it against a database of canned text messages. Alternatively, the spoken message can be compared against a database of spoken "canned" messages that are associated with text interpretations. Either way, the result is a displayed list of text messages that closely match the message composer's spoken message.

The user then selects **120** from among the listed canned messages. This message is then featured alone on the screen where it can be edited **125.** Once editing is complete, the message composer is prompted to add a voice tag or an image **130** to the text message. If neither a voice tag nor image is added to the message then the message is sent to a recipient as an SMS message **135** (text only). Otherwise, the text and voice and/or image is made into an MMS message and sent using the MMS functionality **140** of the mobile phone.

Steps **110** (Speak Message into Phone) and **115** (Display List of Canned Messages ...) require speech-to-text processing. This speech-to-text processing is achieved by a digital signal processor (DSP) within the mobile phone. The DSP is operably coupled with the mobile phone's microphone, screen display, as well as a database of canned messages that can be either text-based, sound-based, or both. The DSP can be simplified by limiting its processing to words or phrases as opposed to sounds or phonemes. This is a less robust implementation but it is also a much less taxing system with respect to processing requirements including power consumption. However, a more complex DSP can be implemented that provides greater speech-to-text processing capabilities.

As earlier stated, the most efficient compromise for creating and sending SMS or MMS messages is to utilize "canned" message templates as a starting point. These messages need to be completed by filling in blank fields with specific data. These fields can be filled in via text entry or voice entry. Voice entry uses the aforementioned speech-to-text processing capability.

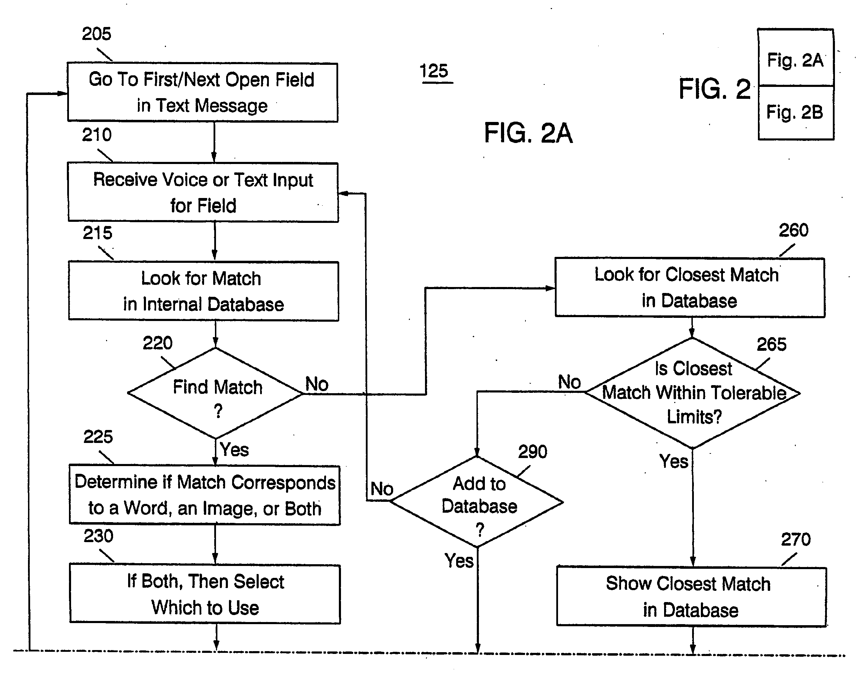

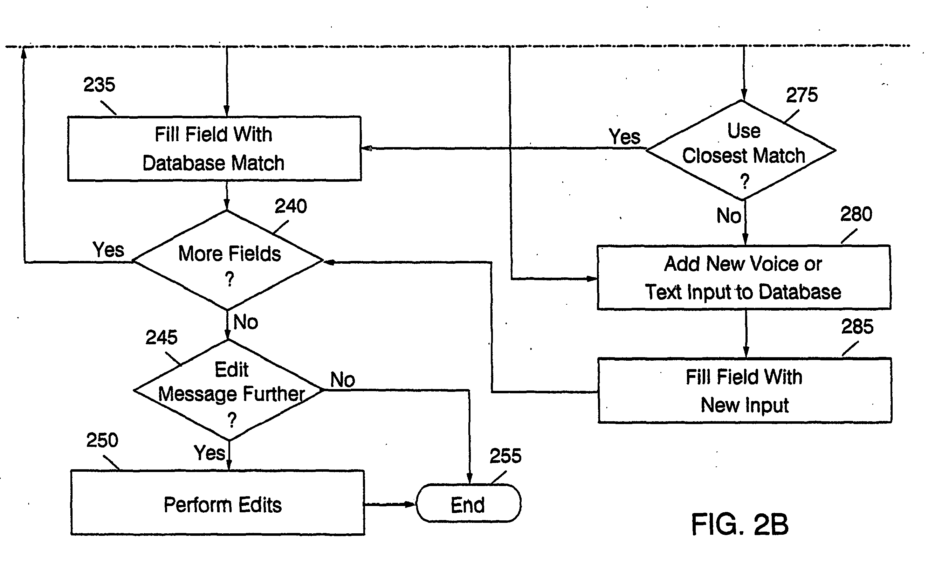

**FIGURE 2** is a flowchart describing the **FIGURE 1** step **125** process of editing a canned message using voice and/or predictive text input. Since the process for text and voice entry is very similar it will be described jointly with particular references to voice or text when appropriate. In addition, the process of editing the canned message can be a hybrid of text and/or voice input.

Once the canned message template has been selected (**FIGURE 1** step**120**), it is brought into a text editor. This means that the canned message is displayed by the mobile phone such that it can be edited. The text editor will move a cursor to the first blank field 205 in the canned message and await either a voice or a text input **210.** The voice or predictive text input is compared to a database of inputs **215, 220** in hopes of finding a match.

If the input is a voice input, then speech-to-text processing is utilized to convert the voice input to text for comparison against a text based database. Alternatively, the voice input can be compared to a sound based database. Each of the sounds (words or phrases) in the database is associated with a text representation of the word or phrase such that when a voice match is found a text response is returned. The database can also contain pointers to images. For instance the word "bird" can represent text or can represent an image of a bird.

If an exact match is found in the database, then it is determined whether the match refers to a word (or phrase), an image, or both **225.** If both a word and an image correspond to the data input, then the message composer is prompted to choose **230** which to use for the current message. Upon making a selection, the choice is placed **235** into the canned message field. A check is made **240** to see if more blank fields are present in the current message. If so, control is sent back to step **205** so that the message composer can provide input the next open field in the canned message. If no more blank fields are present in the current message, a check is made to determine if the message composer wishes to edit the message further **245.** If so, the message composer edits the message via text or voice entry **250** before terminating the editing process **255.** If no additional message editing is desired, the editing process is terminated **255.**

If a match cannot be found after performing steps **215, 220,** then the database will look for the closest match in the database **260** and check to see if the closest match is within a tolerable limits **265.** The database displays **270** all tolerable matches and the message composer is asked to select one of the closest matches **275.** If one of the closest matches is selected then control is sent to step **235** and the blank field is filled with the selection. If the message composer rejects the closest matches, the input is added to the database **280.** If the input was a voice input and there is a sound database, it is added to the sound database as recorded and a textual association is created. Voice inputs are also converted to text and added to the text database. The new input is then placed into the current blank field **285** as text and control is sent to step **240** for processing as described above.

If there are no matches within tolerable limits after performing step **265,** then a further check is performed to see if the message composer wants to add the current input to the database **290.** If so, control is sent to step **280** where the message composer is prompted to add the new input to the database and processing proceeds as described above. If the current input is unsatisfactory to the message composer and he does not want to enter it into the database, then control is returned to step **210** and a new voice or text input is received.

The database(s) may be separately manipulated by the user to add, delete, or modify existing entries. Pointers to images or sounds may also be created for database entries. In addition, if the message recipient is in the mobile phone's phonebook and happens to have an image tagged to the phonebook entry, the image can be made to pop-up upon voice entry of the recipient. This would provide a means of verifying that the mobile phone correctly interpreted the message composer's voice entry.

Earlier it was mentioned that speech-to-text functions could be simplified by limiting the vocabulary to a subset of words or phrases as opposed,to sounds or phonemes. The net effect is to reduce the MIP, memory, and power requirements needed to implement speech-to-text processing. To achieve this goal the speech-to-text function could be limited to the canned message editor application. This would reduce the digital signal processor (DSP) search table (database) to a few canned phrases. The number of words that logically fit within the context of these phrases is also reduced. Similarly, the number of associated images and sounds is reduced. The reduction leads to a corresponding reduction in the required training of speech-to-text algorithms. Algorithm training can be performed during the manufacturing process (before the mobile phone reaches the end user). The training would recognize table (database) entries that are indexed by the canned message application. This reduces the number of MIPs required to carry out the application. Moreover, the speech-to-text algorithm need only be activated when the canned message application is active. This avoids having the power consuming process running in the background when not in use.

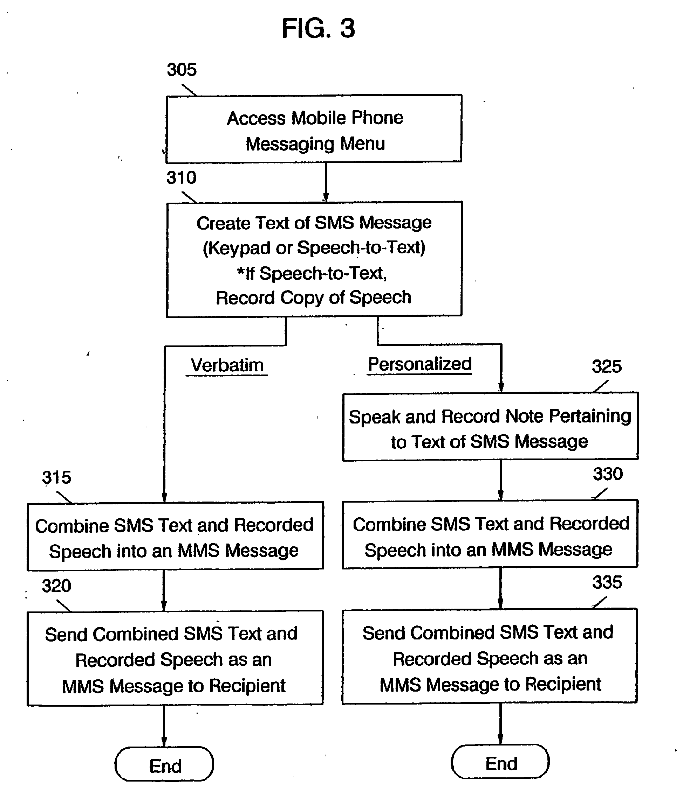

Another embodiment of the present invention is an implementation that does not use "canned" message templates. **FIGURE 3** is a flowchart describing the creating and sending of SMS or MMS messages with speech-to-text assistance. In this embodiment messages are created and a voice tag or image is combined with the text message to form an MMS message. The resulting MMS message is then sent to a recipient. The voice tag can be a verbatim representation of the text message giving the recipient the option of either reading or listening to the message. Or, the voice tag can be a personalized message that accompanies the text message.

The option of adding a voice tag or an image to a message greatly enhances the messaging utility. For instance, the standard text message could be accompanied by a voice tag that tells the recipient to listen and respond. An example of a personalized message would be an MMS message with a text component and a voice tag component where the voice tag could say, "John, read this and call me to discuss." Alternatively, the voice tag could contain the content (like an MP3 snippet) with a text component asking, "John, do you like this new song?" Similarly, an image can be sent in an MMS message with a text component inviting a response like, "John, what do you think of this picture?"

This process also begins by accessing the mobile phone's messaging function **305.** The text message is created **310** using either keypad text entry or speech-to-text voice entry. If voice entry is the selected method, then the message composer's speech is recorded as well as converted to text.

If the message composer merely wishes to create a verbatim-copy of the text message, then the text message and voice recording are combined **315** into an MMS message. The MMS message is then sent **320** to a recipient.

If the message composer wishes to personalize the text message, he speaks and records a note pertaining to the text message **325.** The text message and personalized voice recording are combined **330** into an MMS message and sent **335** to a recipient.

Specific embodiments of an invention are disclosed herein. One of ordinary skill in the art will readily recognize that the invention may have other applications in other environments. In fact, many embodiments and implementations are possible. The following claims are in no way intended to limit the scope of the present invention to the specific embodiments described above. In addition, any recitation of "means for" is intended to evoke a means-plus-function reading of an element and a claim, whereas, any elements that do not specifically use the recitation "means for", are not intended to be read as means-plus-function elements, even if the claim otherwise includes the word "means".

## Claims

1. A method of creating a message on a mobile phone, the mobile phone including a messaging function responsive to voice and text input, the method comprising:
accessing the messaging function (105);
inputting part of a message using voice input (110); displaying a list of text messages that closely match the input (115) wherein the text messages contain at least one open field;
selecting one of the displayed text messages (120); and
editing the selected text message (125);
wherein the method further comprises:
a) displaying the selected text message (205);
b) receiving a voice input for an open field in the selected text message (210);
c) converting the voice input to a text input; and
d) looking for a match between the converted voice input and a database of text (215);
wherein the method further comprises:
if there is a match between the converted voice input and the database of text (220), then
e) determining if the match corresponds to a word, an image, or both (225);
if just a word or just an image, then
f) filling the open field with the word or image (235); if both, then
g) selecting (230) either the word or the image and filling the open field with the selection;
h) checking for more open fields (240);
if there are more open fields, then
i) returning to step b), otherwise terminating the editing process (255),
if there is not a match between the converted voice input and the database of text, then
j) finding the closest match in the database (260);
k) prompting whether to use the closest match (275);
if using the closest match, then
l) filling the open field with the closest match (235);
m) checking for more open fields (240) and if there are more open fields, then returning to step b), otherwise terminating the editing process (255), **characterized in that**,
if not using the closest match, then
o) adding current text input to the database (280);
p) filling the open field with the current text input (285); and
q) checking for more open fields (240) and if there are more open fields, then returning to step b), otherwise terminating the editing process (255).

2. The method of claim 1 further comprising optionally adding a voice tag (130) to the edited text message and combining the voice tag with the edited text message to form an MMS message (135).

3. The method of claim 1 further comprising optionally adding an image (130) to the edited text message and combining the image with the edited text message to form an MMS message (135).

4. The method of claim 1 further comprising checking if the closest match found corresponds to the text input within tolerable limits (265).

5. The method of claim 1 wherein if the closest match found does not correspond to the text input within tolerable limits, prompting to add current text input to database (290).

6. The method of claim 1 further comprising editing the message further (245, 250) once all the open fields have been filled.

7. A system for creating a message on a mobile phone, the mobile phone including a messaging function responsive to voice and text input, the system comprising:
means for accessing the messaging function (105);
means for inputting part of a message using voice input (110);
means for displaying a list of text messages that closely match the input wherein the text messages contain at least one open field (115);
means for selecting one of the displayed text messages (120);
means for editing the selected text message (125);
means for displaying the selected text message (205);
means for receiving a voice input for an open field in the selected text message (210);
means for converting the voice input to a text input; and
means for looking for a match between the converted voice to text input and a database (215);
wherein the system further comprises:
means for determining if a match between the converted voice to text input and the database corresponds to a word, an image, or both (225);
means for selecting (230) either a word or an image from the database if the means for determining if a match between the converted voice to text input and the database corresponds to a word, an image, or both determines that the match corresponds to both;
means for filling the open field with the word or image (235) ;
means for finding a closest match in the database to the converted voice to text input (260);
means for prompting whether to use the closest match (275) ;
means for filling the open field with the closest match (235);
means for filling the open field with the converted voice to text input (285);
means for checking for more open fields in the selected text (240);
means for returning control to the means for receiving a voice input for an open field in the selected text message; and
means for terminating the editing process (255) **characterized by** means for adding the converted voice to text input to the database(280) if the prompted closest match has not been used.

8. The system of claim 7 further comprising means for adding a voice tag (130) to the edited text message and means for combining the voice tag with the edited text message to form an MMS message (135).

9. The system of claim 7 further comprising means for adding an image (130) to the edited text message and means for combining the image with the edited text message to form an MMS message (135).

10. The system of claim 7 further comprising means for checking if the closest match found corresponds to the text input within tolerable limits (265).

11. The system of claim 7 further comprising means for prompting to add current text input to database (290) if the closest match found does not correspond to the text input within tolerable limits.

12. The system of claim 7 further comprising means for editing the message further (245, 250) once all the open fields have been filled.

## Patentansprüche

1. Verfahren zum Erstellen einer Nachricht auf einem Mobiltelefon, wobei das Mobiltelefon eine Benachrichtigungsfunktion beinhaltet, welche auf Sprach- und Texteingabe reagiert, wobei das Verfahren aufweist:
Zugreifen auf die Benachrichtigungsfunktion (105);
Eingeben eines Teils einer Nachricht, wobei die Spracheingabe benutzt wird (110); Anzeigen einer Liste von Textnachrichten, welche sehr nahe mit der Eingabe übereinstimmen (115), wobei die Textnachrichten wenigstens ein offenes Feld enthalten; Auswählen einer der dargestellten Textnachrichten (120); und
Ausgeben der ausgewählten Textnachricht (125);
wobei das Verfahren ferner aufweist:
a) Anzeigen der ausgewählten Textnachricht (205);
b) Empfangen einer Spracheingabe für ein offenes Feld in der ausgewählten Textnachricht (210);
c) Wandeln der Spracheingabe in eine Texteingabe; und
d) Nachsehen nach einer Übereinstimmung zwischen der gewandelten Spracheingabe und einer Datenbank des Textes (215);
wobei das Verfahren ferner aufweist:
wenn es eine Übereinstimmung zwischen der gewandelten Spracheingabe und der Datenbank des Textes gibt (220), dann
e) Bestimmen, ob die Übereinstimmung einem Wort, einem Bild oder beidem entspricht (225);
wenn gerade ein Wort oder ein Bild (übereinstimmt), dann
f) Füllen des offenen Feldes mit dem Wort oder Bild (235);
falls mit beiden, dann
g) Auswählen (230) entweder des Wortes oder des Bildes und Füllen des offenen Feldes mit der Auswahl;
h) Prüfen nach mehr offenen Feldern (240);
wenn es mehrere offene Felder gibt, dann
i) Zurückkehren zu Schritt b), anderenfalls Beenden des Ausgabeprozesses (255), wenn es keine Übereinstimmung zwischen der gewandelten Spracheingabe und der Datenbank des Textes gibt, dann
j) Finden der nächsten Übereinstimmung in der Datenbank (260);
k) Veranlassen, ob die näheste Übereinstimmung zu benutzen ist (275);
falls die näheste Übereinstimmung benutzt wird, dann
l) Füllen des offenen Feldes in der nähesten Übereinstimmung (235);
m) Prüfen nach mehreren offenen Feldern (240), und falls es mehrere offene Felder gibt, dann Zurückkehren zu Schritt b), anderenfalls Beenden des Ausgabevorgangs (255),
**dadurch gekennzeichnet**:
falls nicht die näheste Übereinstimmung benutzt wird, dann
o) Hinzufügen der aktuellen Texteingabe zu der Datenbank (280);
p) Füllen des offenen Feldes mit der aktuellen Texteingabe (285); und
q) Prüfen nach weiteren offenen Feldern (240), und falls es mehrere offene Felder gibt, dann Zurückkehren zu Schritt b), anderenfalls Beenden des Ausgabevorgangs (255).

2. Verfahren nach Anspruch 1, welches ferner das optionale Hinzufügen einer Sprachkennung (130) an die ausgegebene Textnachricht und das Kombinieren der Sprachkennung mit der ausgegebenen Textnachricht aufweist, um eine MMS-Nachricht zu bilden (135).

3. Verfahren nach Anspruch 1, welches ferner das optionale Hinzufügen eines Bildes (130) an die ausgegebene Textnachricht und das Kombinieren des Bildes mit der ausgegebenen Textnachricht aufweist, um eine MMS-Nachricht zu bilden (135).

4. Verfahren nach Anspruch 1, welches ferner das Prüfen aufweist, ob die näheste Übereinstimmung, welche gefunden wurde, der Texteingabe innerhalb zulässiger Grenzen entspricht (265).

5. Verfahren nach Anspruch 1, wobei, wenn die nächste Übereinstimmung, welche gefunden wurde, nicht der Texteingabe innerhalb zulässiger Grenzen entspricht, Veranlassen, um die aktuelle Texteingabe an die Datenbank hinzuzufügen (290).

6. Verfahren nach Anspruch 1, welches ferner das weitere Editieren der Nachricht aufweist (245, 250), sobald alle offenen Felder gefüllt wurden.

7. System zum Schaffen einer Nachricht auf einem Mobiltelefon, wobei das Mobiltelefon eine Benachrichtigungsfunktion beinhaltet, welche auf Sprach- und Texteingabe reagiert, wobei das System aufweist:
eine Vorrichtung zum Zugreifen auf die Benachrichtigungsfunktion (105);
eine Vorrichtung zum Eingeben eines Teils einer Nachricht, wobei die Spracheingabe benutzt wird (110);
eine Vorrichtung zum Darstellen einer Liste von Textnachrichten, welche sehr nahe mit der Eingabe übereinstimmen, wobei die Textnachrichten wenigstens ein offenes Feld beinhalten (115);
eine Einrichtung zum Auswählen einer der angezeigten Textnachrichten (120);
eine Einrichtung zum Ausgeben der ausgewählten Textnachricht (125);
eine Einrichtung zum Anzeigen der ausgewählten Textnachricht (205);
eine Einrichtung zum Empfangen einer Spracheingabe für ein offenes Feld in der ausgewählten Textnachricht (210);
eine Einrichtung zum Wandeln der Spracheingabe in eine Texteingabe; und
eine Einrichtung zum Suchen nach einer Übereinstimmung zwischen der gewandelten Sprach-zu-Text-Eingabe und eine Datenbank (215);
wobei das System ferner aufweist:
eine Einrichtung zum Bestimmen, ob eine Übereinstimmung zwischen der gewandelten Sprach-zu-Text-Eingabe und der Datenbank einem Wort, einem Bild oder beidem entspricht (225);
eine Einrichtung zum Auswählen (230) entweder eines Wortes oder eines Bildes von der Datenbank, falls die Einrichtung für das Bestimmen, ob eine Übereinstimmung zwischen der gewandelten Sprach-zu-Text-Eingabe und der Datenbank einem Wort, einem Bild oder beidem entspricht, bestimmt, dass die Übereinstimmung beiden entspricht;
eine Einrichtung zum Füllen des offenen Feldes mit dem Wort oder Bild (235);
eine Einrichtung zum Finden einer nähesten Übereinstimmung in der Datenbank mit der gewandelten Sprach-zu-Text-Eingabe (260);
eine Einrichtung zum Veranlassen, ob die näheste Übereinstimmung benutzt wird (275);
eine Einrichtung zum Füllen des offenen Feldes mit der nähesten Übereinstimmung (235);
eine Einrichtung zum Füllen des offenen Feldes mit der gewandelten Sprach-zu-Text-Eingabe (285);
eine Einrichtung zum Prüfen, ob mehrere offene Felder in dem ausgewählten Text sind (240);
eine Einrichtung zum Zurücksenden der Steuerung für die Einrichtung zum Empfangen einer Spracheingabe für ein offenes Feld in der ausgewählten Textnachricht; und
eine Einrichtung zum Bestimmen des Ausgabevorgangs (255) durch eine Einrichtung zum Hinzufügen der gewandelten Sprach-zu-Text-Eingabe für die Datenbank (280) **gekennzeichnet**, falls die veranlasste näheste Übereinstimmung nicht benutzt wurde.

8. System nach Anspruch 7, welches ferner eine Einrichtung zum Hinzufügen einer Sprachkennung (130) an die editierte Textnachricht und eine Einrichtung zum Kombinieren der Sprachkennung mit der editierten Textnachricht aufweist, um eine MMS-Nachricht zu bilden (135).

9. System nach Anspruch 7, welches ferner eine Einrichtung, um ein Bild (130) an die ausgegebene Textnachricht hinzuzufügen, und eine Einrichtung zum Kombinieren des Bildes mit der ausgegebenen Textnachricht aufweist, um eine MMS-Nachricht (135) zu bilden.

10. System nach Anspruch 7, welches ferner eine Einrichtung aufweist, um zu prüfen, ob die näheste Übereinstimmung, welche gefunden wurde, der Texteingabe innerhalb zulässiger Grenzen entspricht (265).

11. System nach Anspruch 7, welches ferner eine Einrichtung zum Veranlassen aufweist, um die aktuelle Texteingabe an die Datenbank hinzuzufügen (290), falls die näheste Übereinstimmung, welche gefunden wurde, nicht der Texteingabe innerhalb zulässiger Grenzen entspricht.

12. System nach Anspruch 7, welches ferner eine Einrichtung aufweist, um die Nachricht weiter auszugeben (245, 250), sobald alle offenen Felder gefüllt wurden.

## Revendications

1. Procédé de création d'un message sur un téléphone mobile, le téléphone mobile incluant une fonction de messagerie sensible à une entrée vocale et textuelle, le procédé comprenant :
un accès à la fonction de messagerie (105) ;
une entrée d'une partie d'un message à l'aide d'une entrée vocale (110) ;
un affichage d'une liste de messages textuels qui correspondent étroitement à l'entrée (115), où les messages textuels contiennent au moins un champ vide ;
une sélection d'un des messages textuels affichés (120) ; et une modification du message textuel sélectionné (125) ;
où le procédé comprend en outre :
a) un affichage du message textuel sélectionné (205) ;
b) une réception d'une entrée vocale pour un champ vide dans le message textuel sélectionné (210) ;
c) une conversion de l'entrée vocale en une entrée textuelle ; et
d) une recherche d'une correspondance entre l'entrée vocale convertie et une base de données de texte (215) ;
où le procédé comprend en outre :
s'il existe une correspondance entre l'entrée vocale convertie et la base de données de texte (220), alors
e) une détermination si la correspondance correspond à un mot, une image, ou les deux (225) ;
si uniquement un mot ou uniquement une image, alors
f) un renseignement du champ vide avec le mot ou l'image (235) ;
si les deux, alors
g) une sélection (230) soit du mot soit de l'image et un renseignement du champ vide avec la sélection ;
h) une vérification s'il existe davantage de champs vides (240) ;
s'il existe davantage de champs vides, alors
i) un retour à l'étape b), sinon, un achèvement du processus de modification (255)
s'il n'existe pas de correspondance entre l'entrée vocale convertie et la base de données de texte, alors
j) le fait de trouver la correspondance la plus étroite dans la base de données (260) ;
k) une invitation à utiliser ou non la correspondance la plus étroite (275) ;
si la correspondance la plus étroite est utilisée, alors
l) un renseignement du champ vide avec la correspondance la plus étroite (235) ;
m) une vérification s'il existe davantage de champs vides (240) et s'il existe davantage de champs vides, un retour alors à l'étape b), sinon, un achèvement du processus de modification (255), **caractérisé en ce que**,
si la correspondance la plus étroite n'est pas utilisée, alors
o) un ajout d'une entrée textuelle actuelle à la base de données (280) ;
p) un renseignement du champ vide avec l'entrée textuelle actuelle (285) ; et
q) une vérification s'il existe davantage de champs vides (240) et s'il existe davantage de champs vides, un retour alors à l'étape b), sinon, un achèvement du processus de modification (255).

2. Procédé selon la revendication 1, comprenant en outre en option un ajout d'une étiquette vocale (130) au message textuel modifié et une combinaison de l'étiquette vocale avec le message textuel modifié afin de créer un message MMS (135).

3. Procédé selon la revendication 1, comprenant en outre en option un ajout d'une image (130) au message textuel modifié et une combinaison de l'image avec le message textuel modifié afin de créer un message MMS (135).

4. Procédé selon la revendication 1, comprenant en outre une vérification si la correspondance la plus étroite trouvée correspond à l'entrée textuelle dans des limites acceptables (265).

5. Procédé selon la revendication 1, où si la correspondance la plus étroite trouvée ne correspond pas à l'entrée textuelle dans des limites acceptables, une invitation à ajouter une entrée textuelle actuelle à la base de données (290) a lieu.

6. Procédé selon la revendication 1, comprenant en outre une modification supplémentaire du message (245, 250) une fois que tous les champs vides ont été renseignés.

7. Système permettant de créer un message sur un téléphone mobile, le téléphone mobile incluant une fonction de messagerie sensible à une entrée vocale et textuelle, le système comprenant :
un moyen permettant d'accéder à la fonction de messagerie (105) ;
un moyen permettant d'entrer une partie d'un message à l'aide d'une entrée vocale (110) ;
un moyen permettant d'afficher une liste de messages textuels qui correspondent étroitement à l'entrée, où les messages textuels contiennent au moins un champ vide (115) ;
un moyen permettant de sélectionner un des messages textuels affichés (120) ;
un moyen permettant de modifier le message textuel sélectionné (125) ;
un moyen permettant d'afficher le message textuel sélectionné (205) ;
un moyen permettant de recevoir une entrée vocale pour un champ vide dans le message textuel sélectionné (210) ;
un moyen permettant de convertir l'entrée vocale en une entrée textuelle, et un moyen permettant de rechercher une correspondance entre l'entrée convertie voix-texte et une base de données (215) ;
où le système comprend en outre :
un moyen permettant de déterminer si une correspondance entre l'entrée convertie voix-texte et la base de données correspond à un mot, une image, ou les deux (225) ;
un moyen permettant de sélectionner (230) soit un mot soit une image dans la base de données si le moyen permettant de déterminer si une correspondance entre l'entrée convertie voix-texte et la base de données correspond à un mot, une image ou les deux détermine que la correspondance correspond aux deux ;
un moyen permettant de renseigner le champ vide avec le mot ou l'image (235) ;
un moyen permettant de trouver une correspondance la plus étroite dans la base de données à l'entrée convertie voix-texte (260) ;
un moyen permettant d'inviter à utiliser ou non la correspondance la plus étroite (275) ;
un moyen permettant de renseigner le champ vide avec la correspondance la plus étroite (235) ;
un moyen permettant de renseigner le champ vide avec l'entrée convertie voix-texte (285) ;
un moyen permettant de vérifier s'il existe davantage de champs vides dans le texte sélectionné (240) ;
un moyen permettant de redonner le contrôle au moyen permettant de recevoir une entrée vocale pour un champ vide dans le message textuel sélectionné ; et
un moyen permettant de terminer le processus de modification (255) **caractérisé par** un moyen permettant d'ajouter l'entrée convertie voix-texte à la base de données (280) si la correspondance la plus étroite proposée n'a pas été utilisée.

8. Système selon la revendication 7, comprenant en outre un moyen permettant d'ajouter une étiquette vocale (130) au message textuel modifié et un moyen permettant de combiner l'étiquette vocale avec le message textuel modifié afin de créer un message MMS (135).

9. Système selon la revendication 7, comprenant en outre un moyen permettant d'ajouter une image (130) au message textuel modifié et un moyen permettant de combiner l'image avec le message textuel modifié afin de créer un message MMS (135).

10. Système selon la revendication 7, comprenant en outre un moyen permettant de vérifier si la correspondance la plus étroite trouvée correspond à l'entrée textuelle dans des limites acceptables (265).

11. Système selon la revendication 7, comprenant en outre un moyen permettant d'inviter à ajouter une entrée textuelle actuelle à la base de données (290) si la correspondance la plus étroite trouvée ne correspond pas à l'entrée textuelle dans des limites acceptables.

12. Système selon la revendication 7, comprenant en outre un moyen de modification supplémentaire du message (245, 250) une fois que tous les champs vides ont été renseignés.
